# EUROPEAN PATENT SPECIFICATION

(11) **EP 1 544 084 B1**
(45) Date of publication and mention of the grant of the patent: **17.01.2007**
(21) Application number: 03425802.0
(22) Date of filing: 15.12.2003
(51) Int. Cl.: B62D 25/14

(54) **Support structure for a dashboard of a vehicle**
Trägerstruktur für das Armaturenbrett eines Kraftfahrzeugs
Structure de support pour la planche de bord d'un véhicule automobile

(43) Date of publication of application: 22.06.2005
(73) Proprietor: DENSO THERMAL SYSTEMS S.p.A., 10046 Poirino (Torino) (IT); DENSO CORPORATION, Kariya-shi, Aichi-ken, 448-8661 (JP)
(72) Inventor: Cozzani, Massimo c/o Denso Thermal Systems Spa, 10046 Poirino (Torino) (IT); Pettigiani, Maurizio c/o Denso Thermal Systems Spa, 10046 Poirino (Torino) (IT)
(74) Representative: Marchitelli, Mauro

(56) References cited:
- DE-A- 10 101 927
- DE-U- 20 308 895
- US-A- 4 432 565
- PATENT ABSTRACTS OF JAPAN vol. 1996, no. 09, 30 September 1996 (1996-09-30) -& JP 08 132923 A (YAMAKAWA IND CO LTD), 28 May 1996 (1996-05-28)

## Description

The present invention generally pertains to the automotive industry and relates to a support structure for a dashboard of a vehicle.

The dashboard of a vehicle is a complex unit which comprises multiple device and controls, such as the support structure of the steering wheel, the air treatment and distribution assembly, the instrument panel, the airbag module, etc.

The support structure of a dashboard normally comprises a metal beam destined to be fastened to the body of the vehicle. Said beam constitutes a load bearing element of the whole dashboard assembly. In known support structures, the metal beam is formed by an extruded element provided with longitudinal grooves within which are housed and fastened anchoring portions of support brackets for fastening the various devices and controls of the dashboard.

Document US 4 432 565 A discloses a dashboard of support structure according to the preamble of claim 1.

The object of the present invention is to provide a support structure of a dashboard that is simpler and more economical than prior art solutions and that allows to simplify the fastening of the support brackets of the various devices and controls of the dashboard.

According to the present invention, said object is reached by a support structure having the characteristics set out in the main claim.

The characteristics and the advantages of the present invention shall become readily apparent from the detailed description that follows, provided purely by way of non limiting example, in which:
- Figure 1 is a perspective view showing a support structure according to the present invention,
- Figure 2 is a partial perspective view of the part indicated by the arrow II in Figure 1,
- Figures 3 and 4 are sections according to the lines III-III and IV-IV of Figure 2,
- Figure 5 is a section according to the line V-V of Figure 1,
- Figure 6 is an enlarged scale section view of the part indicated by the arrow VI in Figure 5,
- Figure 7 is a section according to the line VII-VII of Figure 1, and
- Figures 8 and 9 are enlarged scale sections of the parts indicated by the arrows VIII and IX in Figure 7.

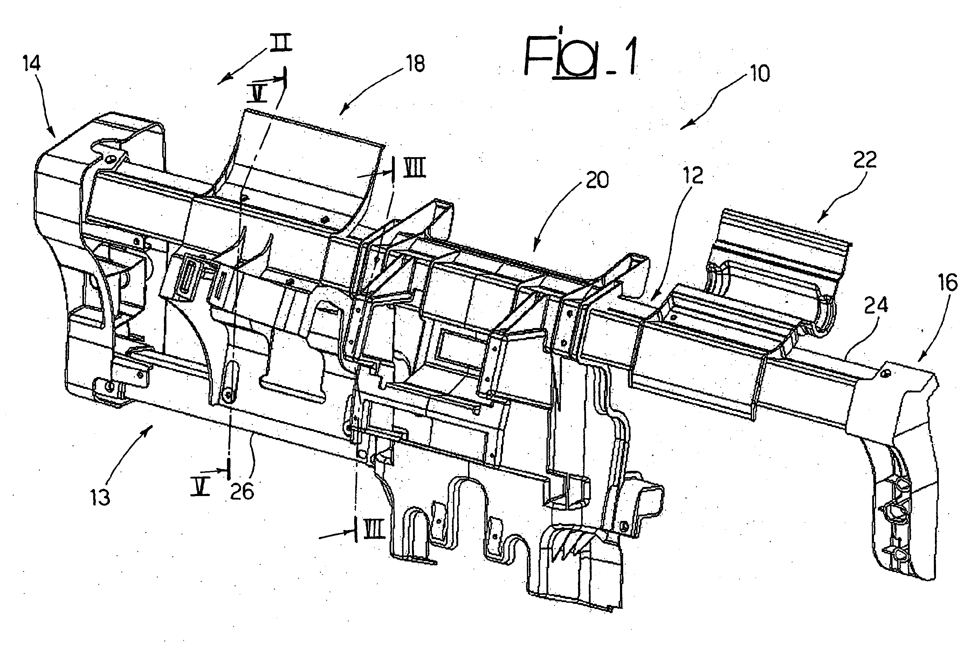

With reference to Figure 1, the number 10 designates a support structure for a dashboard of a motor vehicle. The support structure 10 comprises a main metal beam 12, an auxiliary metal beam 13 and a plurality of support brackets fastened to the main beam 12 and possibly to the auxiliary beam 13 in the manner described hereafter. In the embodiment illustrated by way of example in Figure 1, the support structure 10 comprises two end support brackets 14, 16, a support bracket 18 for the vehicle steering control assembly, a support bracket 20 for air treatment and distribution assembly of the vehicle, and a support bracket 22 for the airbag module on the passenger side.

The support brackets 14, 16, 18, 20, 22 can be obtained from a light alloy casting. The two end support brackets 14, 16 are fastened to the body of the vehicle, whilst the support brackets 18, 20, 22 are provided with seats and with fastening means respectively for the steering control assembly, for the air treatment and distribution assembly and for the airbag module. The manner in which these components are fastened to the support brackets 18, 20, 22 is not illustrated herein because it lies outside the scope of the present invention. The support structure 10 also serves the function of supporting plastic material components (not shown) which constitute the outer coating of the dashboard.

The main beam 12 and the auxiliary beam 13 are both constituted by bent sheet metal. Each of said beams is obtained by bending a metal sheet according to a cylindrical shape with closed cross section. The opposite longitudinal edges of the metal sheet are positioned close together and form a continuous longitudinal rib 24, 26 which extends towards the exterior of the closed section for the entire length of the beam 12, 13. The longitudinal edges forming the longitudinal rib 24, 26 are fastened to each other by means of continuous or spot electrical welding. Each rib 24, 26 is provided with through holes for fastening the support brackets. Said holes can be formed by means of punching on the metal sheet before the sheet is bent, so that the holes on the opposite edges of the metal sheet are mutually superposed when the two longitudinal edges are positioned close to each other following the bending operation. Alternatively, the through holes on the ribs 24, 26 can be formed after forming the beam 12, 13 by means of bending and welding.

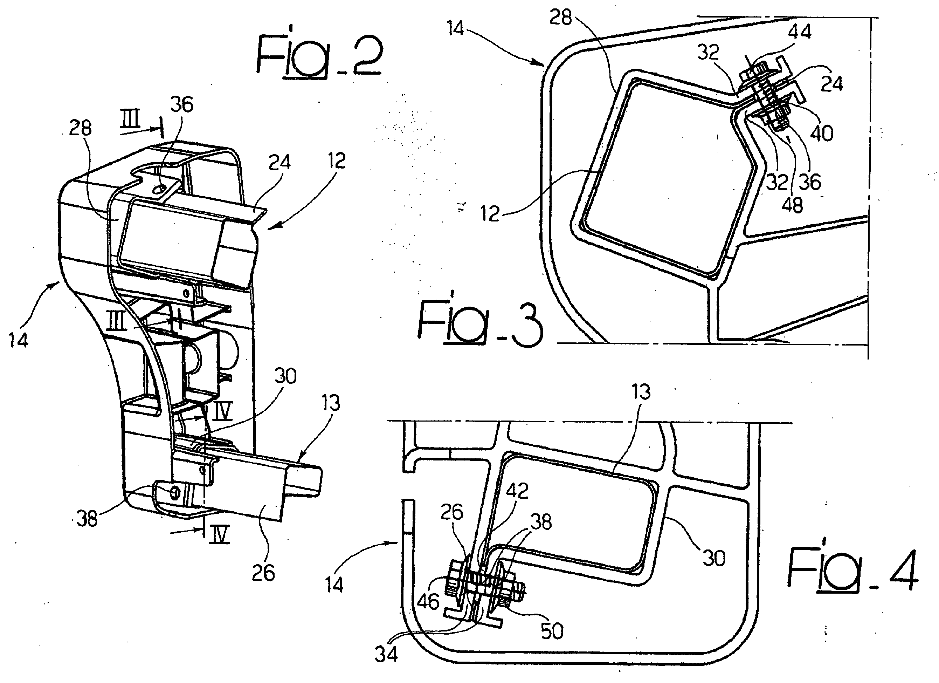

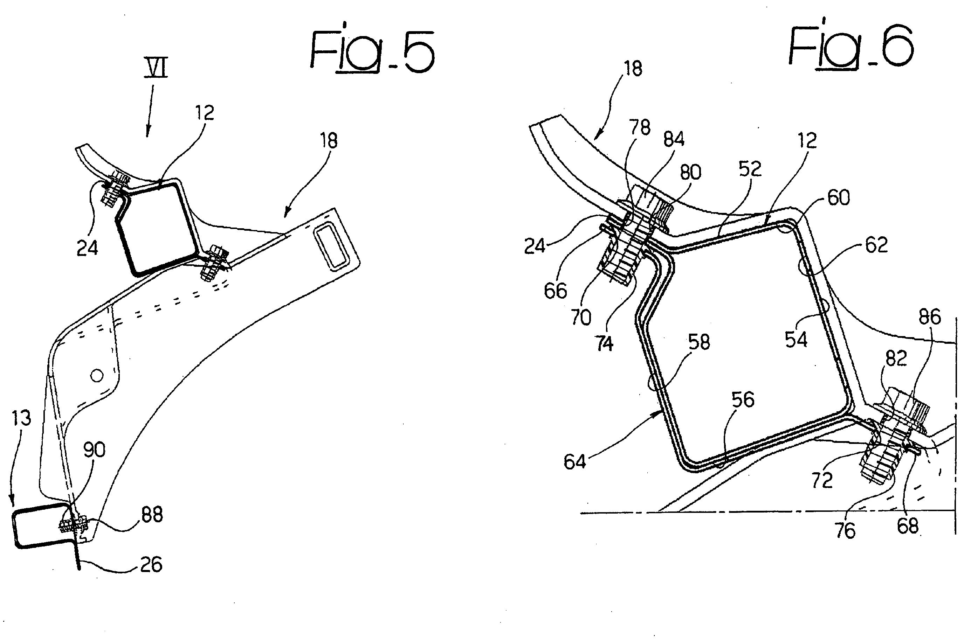

With reference to Figures 2-4, the end support bracket 14 is provided with two seats 28, 30 each whereof has a profile corresponding to that of the section of a respective beam 12, 13. Each of the seats 28, 30 is formed by a metal wall, integral with the body of the support bracket 14. The walls forming the seats 28, 30 have two portions 32, 34 which face each other and receive between them the ribs 24, 26 of the respective beams 12, 13. The portions 32, 34 of the seats 28, 30 are provided with through holes 36, 38. The end portions of the beams 12, 13 are inserted into the respective seats 28, 30 in a position in which through holes 40, 42 formed in the ribs 24, 26 are aligned with the holes 36, 38. Screws 44, 46 are inserted through the aligned holes 36, 40 and 48, 42. The screws 44, 46 engage corresponding nuts 48, 50. The portions 32, 34 of the seats 28, 30 are elastically deformable to grip between them the ribs 24, 26 as a result of the tightening of the screws 44, 46.

The fastening of the second end support bracket 16 to the main beam 12 is effected in a similar manner to the one described above. The only difference is that the support bracket 16 is fastened solely to the main beam 12 because the auxiliary beam 13 extends only between the end support bracket 14 and the support bracket 20 of the air treatment and distribution assembly.

Figures 5 and 6 illustrated the manner in which the support bracket 18 for the steering control assembly is fastened to the main beam 12 and to the auxiliary beam 13. With reference in particular to Figure 6, the main beam 12 has an upper wall 52, a front wall 54, a lower wall 56 and a rear wall 58. The upper wall 52 is slightly inclined relative to a vertical plane. The support bracket 18 has two bearing surfaces 60, 62 which bear, respectively, against the upper wall 52 and against the front wall 54 of the main beam 12.

A fastening bracket 64 bears against the rear surface 58 and against the lower surface 56 of the main beam 12. The fastening bracket 64 has two fastening portions 66, 68 provided with respective through holes 70, 72. A nut 74, 76 is fastened to the fastening bracket 64 in correspondence with each hole 70, 72. The nut 74 is aligned to a through hole 78 of the rib 24 which is in turn aligned to a through hole 80 of the support bracket 18. The nut 76 is aligned to a through hole 82 of the support bracket 18. The nuts 74, 76 are engaged by respective screws 84, 86. The screw 84 extends through the hole 80 of the support bracket 18 and through the hole 78 of the rib 24.

As shown in Figure 5, the support bracket 18 is' also fastened to the auxiliary beam 13 by means of one or more screws 88 which engage respective nuts 90 fastened on the inner part of the front wall of the auxiliary beam 13.

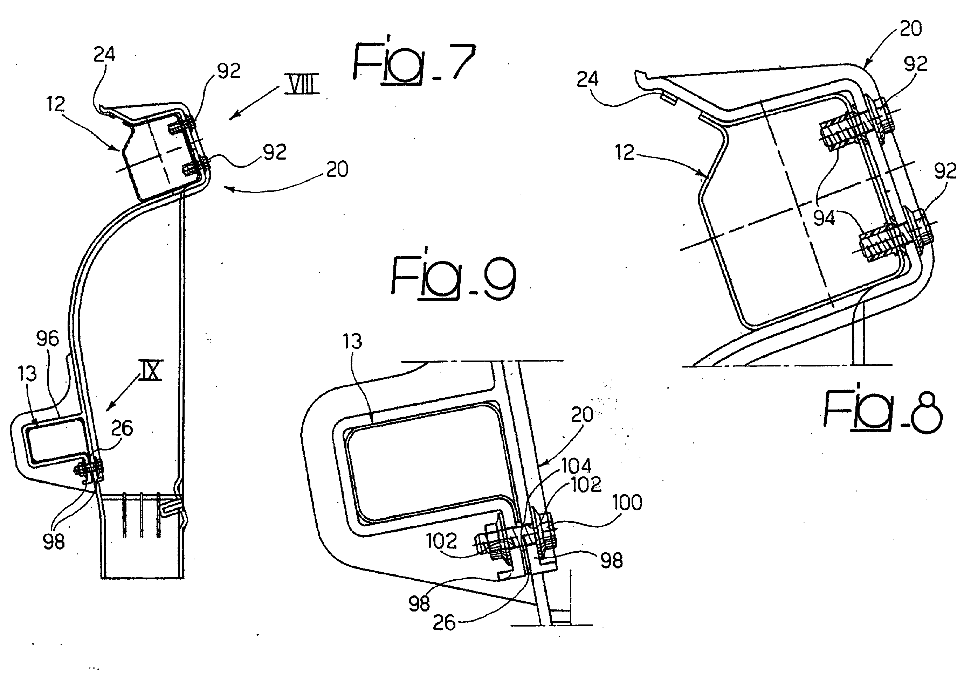

Figures 7, 8 and 9 show the way in which the support bracket 20 for the air treatment and distribution assembly is fastened to the beams 12, 13. The main beam 12 is fastened by means of screws 92 which extend through holes formed in the front wall of the main beam 12 and which engage respective nuts 94 fastened on the inner part of the front wall of the main beam 12.

The support bracket 20 has an integral seat 96 into which is inserted an end portion of the auxiliary beam 13. The seat 96 has two fastening portions 98 between which is inserted the rib 26 of the auxiliary beam 16. A screw 100 is inserted through aligned holes 102, 104 of the fastening portions 98 and of the rib 26. The screw 100 engages a nut 106. The fastening portions 98 are elastically deformable to grip between them the rib 26 as a result of the tightening of the screw 100.

The support bracket 22 of the airbag module is fastened to the main beam 12 by means of a first series of screws which extend through holes formed in the rib 24 and by means of a second series of screws which extend through holes formed in the front wall of the beam 12.

Each of the support brackets 14, 16, 18, 20, 22 is fastened to one of the ribs 24, 26 of the main beam 12 or of the auxiliary beam 13. Said ribs serve a dual function. In the first place, the ribs 24, 26 close, by welding, the closed profile of the beams 12, 13. These ribs are also exploited as reference surfaces for positioning and fastening the support brackets. The bent sheet metal beams 12, 13 are more economical than the extruded beams used in some known solutions. Exploiting the ribs of the beams to position and fasten the support brackets allows to fasten the support brackets with the same precision and rigidity obtained with extruded beams.

## Claims

1. A support structure of a dashboard of a vehicle, comprising:
- at least one metallic beam (12, 13), and
- a plurality of support brackets (14, 16, 18, 20, 22) fastened to said beam (12, 13),
whereby said beam (12, 13) is constituted by bent sheet metal and has at least one continuous longitudinal rib (24, 26) formed by two longitudinal edges positioned next to each other and fastened to each other by means of welding, **characterised in that** at least one of said support brackets (14, 16, 18, 20, 22) is fastened to the beam (12, 13) by means of at least one screw (44, 46, 84, 100) which extends through aligned through holes (36, 38, 40, 42, 80, 78, 102, 104) formed in the support bracket (14, 16, 18, 20, 22) and in the longitudinal rib (24, 26) of the beam (12, 13).

2. A support structure as claimed in claim 1, **characterised in that** it comprises a main beam (12) which extends between two end support brackets (14, 16) to be fastened to the body of the vehicle, and auxiliary beam (13) which extends between a first of said end support brackets (14) and a support bracket (20) for an air treatment and distribution assembly of the vehicle.

3. A support structure as claimed in claim 2, **characterised in that** it comprises a support bracket (18) of a steering control assembly positioned between the first end support bracket (14) and the support bracket (20) for the air treatment and distribution assembly, the support bracket (18) of the steering control assembly fastened to the main beam (12) and to the auxiliary beam (13).

4. A support structure as claimed in claim 2, **characterised in that** it comprises a support bracket (22) of an airbag module positioned between the support bracket (20) for the air treatment and distribution assembly and a second end support bracket (16), the support bracket of the airbag module being fastened solely to the main beam (12).

5. A support structure as claimed in claim 2, **characterised in that** each of said end support brackets (14, 16) is provided with a seat (28) which receives an end portion of the main beam (12), this seat being provided with deformable fastening portions (32) which grip between the the longitudinal edges forming the rib (24) of the main beam (12).

## Patentansprüche

1. Trägerstruktur für das Armaturenbrett eines Kraftfahrzeugs, umfassend:
- wenigstens einen Metall-Profilträger (12, 13) und
- eine Vielzahl von an dem Profilträger befestigten Kragträgern (14, 16, 18, 20, 22), wobei der Profilträger (12, 13) aus gebogenem Metallblech besteht und wenigstens eine durchgehende Längsschiene (24, 26) aufweist, die durch zwei dicht beieinander angeordnete und mittels Löten aneinander befestigte Längskanten gebildet ist.
**dadurch gekennzeichnet, dass**
wenigstens einer der Kragträger (14, 16, 18, 20, 22) an dem Profilträger (12, 13) mittels wenigstens einer Schraube (44, 46, 84, 100) befestigt ist, die sich durch ausgerichtete Durchgangsöffnungen (36, 38, 40, 42, 80, 78, 102, 104) erstreckt, die in dem Kragträger (14, 16, 18, 20, 22) und in der Längsschiene (24, 26) des Profilträgers (12, 13) ausgebildet sind.

2. Trägerstruktur nach Anspruch 1, **dadurch gekennzeichnet, dass** sie einen Hauptträger (12), der sich zwischen zwei am Rumpf des Fahrzeugs zu befestigenden Kopfquerträgern (14, 16) erstreckt, und einen Hilfsträger (13) umfasst, der sich zwischen einem ersten der Kopfquerträger (14) und einem Kragträger (20) für eine Luftbehandlungs- und Verteilungsanlage des Fahrzeugs erstreckt.

3. Trägerstruktur nach Anspruch 2, **dadurch gekennzeichnet, dass** sie einen Kragträger (18) einer Lenkvorrichtungsanlage umfasst, die zwischen dem ersten Kopfquerträger (14) und dem Kragträger (20) für die Luftbehandlungs- und Verteilungsanlage angeordnet ist, wobei der Kragträger (18) der Lenkvorrichtungsanlage an dem Hauptträger (12) und an dem Hilfsträger (13) befestigt ist.

4. Trägerstruktur nach Anspruch 2, **dadurch gekennzeichnet, dass** sie einen Kragträger (22) eines Airbagmoduls umfasst, das zwischen dem Kragträger (20) für die Luftbehandlungs- und Verteilungsanlage und einem zweiten Kopfquerträger (16) angeordnet ist, wobei der Kragträger des Airbagmoduls einzig an dem Hauptträger (12) befestigt ist.

5. Trägerstruktur nach Anspruch 2, **dadurch gekennzeichnet, dass** jeder der Kopfquerträger (14, 16) mit einem Sitz (28) versehen ist, der einen Endabschnitt des Hauptträgers (12) aufnimmt, wobei dieser Sitz mit verformbaren Befestigungsabschnitten (32) versehen ist, die zwischen den die Schiene (24) des Hauptträgers (12) bildenden Längskanten klemmen.

## Revendications

1. Structure de support d'un tableau de bord d'un véhicule, comportant :
- au moins une traverse métallique (12, 13), et
- une multiplicité de consoles de support (14, 16, 18, 20, 22) fixées sur ladite traverse (12, 13),
ladite traverse (12, 13) étant constituée par de la tôle pliée et ayant au moins une nervure longitudinale continue (24, 26) formée par deux bords longitudinaux positionnés l'un à la suite de l'autre et fixés l'un à l'autre au moyen d'une soudure, **caractérisée en ce que** au moins une desdites consoles de support (14, 16, 18, 20, 22) est fixée sur la traverse (12, 13) au moyen d'au moins une vis (44, 46, 84, 100) qui s'étend à travers des trous débouchants alignés (36, 38, 40, 42, 80, 78, 102, 104) formés dans la console de support (14, 16, 18, 20, 22) et dans la nervure longitudinale (24, 26) de la traverse (12, 13).

2. Structure de support selon la revendication 1, **caractérisée en ce qu'**elle comprend une traverse principale (12) qui s'étend entre deux consoles de support d'extrémité (14, 16) afin d'être fixée sur la carrosserie du véhicule, et une traverse auxiliaire (13) qui s'étend entre une première desdites consoles de support d'extrémité (14) et une console de support (20) pour un ensemble de traitement et de distribution d'air du véhicule.

3. Structure de support selon la revendication 2, **caractérisée en ce qu'**elle comprend une console de support (18) d'un ensemble de commande de direction positionné entre la première console de support d'extrémité (14) et la console de support (20) pour l'ensemble de traitement et de distribution d'air, la console de support (18) de l'ensemble de commande de direction étant fixée sur la traverse principale (12) et sur la traverse auxiliaire (13) .

4. Structure de support selon la revendication 2, **caractérisée en ce qu'**elle comprend une console de support (22) d'un module de coussin gonflable positionné entre la console de support (20) pour l'ensemble de traitement et de distribution d'air et une deuxième console de support d'extrémité (16), la console de support du module de coussin gonflable étant fixée uniquement sur la traverse principale (12).

5. Structure de support selon la revendication 2, **caractérisée en ce que** chacune desdites consoles de support d'extrémité (14, 16) est pourvue d'un siège (28) qui reçoit une partie d'extrémité de la traverse principale (12), ce siège étant pourvu de parties de fixation déformables (32) qui s'accrochent entre les bords longitudinaux formant la nervure (24) de la traverse principale (12).
